# EUROPÄISCHE PATENTANMELDUNG

(11) **EP 1 085 265 A1**
(43) Veröffentlichungstag der Anmeldung: **21.03.2001**
(21) Anmeldenummer: 00119684.9
(22) Anmeldetag: 08.09.2000
(51) Int. Cl.: F23J 15/00, B01D 53/79

(54) **Injektionslanze zum Einbringen von flüssigen oder gasförmigen Medien in einen Rauchgasstrom**

(30) Priorität: 17.09.1999 CH 171699
(71) Anmelder: Kemter, Andreas, 78315 Radolfzell (DE)
(72) Erfinder: Kemter, Andreas, Dr., 78315 Radolfzell (DE)
(74) Vertreter: Felber, Josef

(57) **Zusammenfassung**

Bei dieser Injektionslanze wird die Spitze des äusseren Schutzrohres (1) permanent im Rauchgasstrom (4) belassen, während das Lanzenrohr (2) aus dem Rauchgasstrom (4) zurückgezogen wird und zwar bis in den Bereich der Flossenwand (6) des Rauchgaskanals. Die Lanzenrohrspitze mit der empfindlichen Düse (5) wird so vor Verschmutzung, Verstopfung, Erossion, Korrossion und Verbrennen geschützt. Das Lanzenrohr (2) wird durch den Druck vom anstehenden Behandlungsmedium bei Aktivierung der Lanze gegen den Druck einer Feder (3) ausgefahren. Dabei wird die ggf. verschmutzte bzw. von Rauchgaspartikeln zugesetzte Mündung der Spitze des Schutzrohres (1) zuverlässig gereinigt. Es wird weder Druckluft als Spülluftmedium benötigt, um Staubanlagerungen zwischen Lanzenrohr (2) und dem Schutzrohr (1) zu verhindern, noch bedarf es der bisher notwendigen gesonderten Kühlung der Lanze im nichtaktiven Zustand.

## Beschreibung

Die Erfindung betrifft eine Injektionslanze zum Einbringen eines flüssigen oder gasförmigen Behandlungsmediums in einen Rauchgasstrom. Insbesondere handelt es sich hierbei um das Einbringen eines Entstickungsmediums oder eines Dioxininhibitors in den Rauchgasstrom einer Feuerungsanlage, um die bei den Verbrennungsvorgängen entstehenden Stickoxidanteile oder Dioxine im Rauchgas zu reduzieren.

In Feuerungsanlagen entstehen verschiedene gasförmige Verbindungen, die umwelt- bzw. gesundheitsschädlich sind und deshalb zu einem möglichst hohen Prozentsatz aus den Rauchgasen entfernt werden müssen. Emissionsgrenzwerte werden durch gesetzliche Vorschriften vorgegeben und dürfen nicht überschritten werden.

Die nichtkatalytische Rauchgsentstickung wird über die Aufspaltung der Stickoxide in Stickstoff und Wasser im Feuerraum bei hohen Temperaturen durch Einbringung von Ammoniak in den Rauchgasstrom realisiert. Ammoniak wird in Form von handelsüblichem Ammoniakwasser oder in Form von in Wasser gelösten Ammoniumverbindungen oder als Ammoniakgas dem Rauchgasstrom zugeführt. Die angestrebte chemische Reaktion findet in einem relativ breiten Temperaturbereich statt, der Reduktionsgrad ist jedoch nur innerhalb eines schmalen Temperaturfensters befriedigend. Da sich das Temperaturfenster in Abhängigkeit der Feuerungsbedingungen räumlich im Feuerraum verschiebt, muß die Einbringung des Ammoniaks dieser räumlichen Verschiebung folgen. Geschieht das nicht, können die Emissionsgrenzwerte nicht mehr eingehalten werden, steigt der Verbrauch an Behandlungsmedium sehr stark an und der Anteil nichtreagierten Ammoniaks erreicht unzulässig hohe Werte. Das Behandlungsmedium wird daher nicht permanent über die gleichen Eindüsstellen eingebracht, sondern über sich abwechselnde und dadurch dem für die Reaktion optimalen Temperaturfenster folgende Eindüsstellen, die je von einer Eindüslanze gebildet werden. Die Gesamtheit aller Eindüsstellen bedient eine räumliche Matrix im Rauchgaskanal, innerhalb derer ausreichend hohe Entstickungsraten für alle Betriebsarten der Feuerung gewährleistet sind. Es ist also immer nur ein Teil der installierten Eindüslanzen aktiv, während die restlichen Lanzen der Matrix nicht aktiv sind. Die Eindüslanzen werden durch die Stege in der Flossenwand des Kessels hindurchgeführt und ragen in den heißen Rauchgasstrom. Die eigentlichen Lanzen sind deshalb meistens in einem Schutzrohr untergebracht, um vertretbare Standzeiten der Düsen zu erreichen. Die aktiven Lanzen werden durch das durchströmende Behandlungsmedium ausreichend gekühlt und so vor Glühen und Verbrennen geschützt. Damit die nicht aktiven Lanzen nicht glühen oder verbrennen, werden sie mit einer bestimmten Menge Wasser gespeist und so gekühlt. Die relativ große Menge an zugeführtem Behandlungsmedium und Kühlwasser, insbesondere bei einer grösseren Matrix, wirkt sich negativ auf den thermischen Wirkungsgrad und den Gasausbrand der Feuerungsanlage aus. Bei sehr geringen Kühlwassermengen je Lanze oder bei Unzulässigkeit von Kühlwassereinsatz müssen die inaktiven Lanzen mit einer Sperrluftschicht zwischen Lanze und Schutzrohr beaufschlagt werden, um die Düsenmündung vor Verschmutzung, Erosion und Korrosion zu schützen und um eine gewisse Isolationsschicht gegen Verbrennen zu bilden. Die Standzeiten der Lanzen verringern sich dabei jedoch spürbar.

Aufgabe und Ziel der vorliegenden Erfindung ist es, eine Injektionslanze zu schaffen, die bei einer sehr hohen Standzeit weder Kühlflüssigkeit noch Sperrluft benötigt und die kostengünstig herstellbar ist.

Diese Aufgabe wird gelöst von einer Injektionslanze zum Einbringen von flüssigen oder gasförmigen Medien in den Rauchgasstrom eines Feuerraumes, mit einem Schutzrohr und einem darin liegenden Lanzenrohr, dadurch gekennzeichnet, dass das Lanzenrohr im Schutzrohr linear verschiebbar ist.

Die Zeichnungen zeigen ein vorteilhaftes Ausführungsbeispiel einer solchen Injektionslanze in einem Langsschnitt in verschiedenen Verschiebepositionen des Lanzenrohres. Anhand dieser Zeichnungen wird der Aufbau und die Funktion dieser Injektionslanze im einzelnen beschrieben und erläutert.

Es zeigt:
- Figur 1:: Die Injektionslanze in nichtaktivem Zustand, also mit ganz zurückgezogenem Lanzenrohr, in einem Längsschnitt;
- Figur 2:: Die Injektionslanze nach dem Start der Aktivierung, mit gerade ausfahrendem Lanzenrohr, in einem Längsschnitt;
- Figur 3:: Die Injektionslanze in aktivem Zustand, also mit ganz ausgefahrenem Lanzenrohr, in einem Längsschnitt;
- Figur 4:: Die Injektionslanze nach Abbruch der Aktivierung, mit gerade zurückfahrendem Lanzenrohr, in einem Längsschnitt;
- Figur 5:: Die Injektionslanze nach Abbruch der Aktivierung, mit voll zurückgefahrenem, in Ruheposition befindlichem Lanzenrohr, in einem Längsschnitt.

Die Grundidee hinter dieser Injektionslanze ist es, das Schutzrohr permanent im Rauchgas zu belassen und bei unterbrochener Aktivität der Injektionslanze ausschließlich das im Schutzrohr 1 untergebrachte Lanzenrohr 2 zurückzuziehen, und zwar soweit, bis die Mündung 5 des Lanzenrohres 2 und somit die Düse 5 der Lanze in den Bereich der Flossenrohrwand 6 zu liegen kommt. Gemäss einer bevorzugten Konstruktion dieser Injektionslanze erfolgt das lineare Verschieben des Lanzenrohres 2 im Innern des Schutzrohres 1 in einer Richtung mittels einer Feder 3, und in der anderen Richtung kraft eines hydraulischen Druckes, welcher vom anstehenden Behandlungsmedium aufgebracht wird.

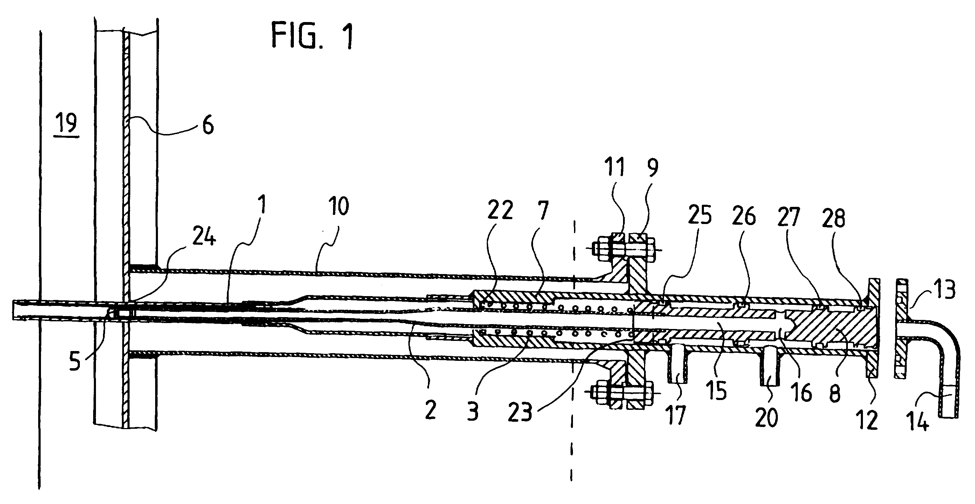

In Figur 1 ist die Injektionslanze in nichtaktivem Zustand gezeigt. In dieser Lage ist das Lanzenrohr 2 ganz zurückgezogen, das heisst, es ruht im Bild in seiner ganz nach rechts verschobenen Position. Beim Zurückziehen der Lanze darf möglichst kein Behandlungsmedium an die Flossenrohrwand 6 bzw. an die Ausmauerung 19 gelangen, damit dort keine Taupunktunterschreitung und damit erhöhter Verschleiss auftreten kann. Das feststehende Schutzrohr 1 verhindert das. Die hier gezeigte Injektionslanze ist so aufgebaut, dass das Lanzenrohr 2 im vorderen Bereich mit Spiel in einem Schutzrohr 1 geführt ist. In diesem Schutzrohr 1 ist das Lanzenrohr 2 in axialer Richtung verschiebbar. Das Lanzenrohr läuft im Zylinderrohr 7 und wird im Kolbenrohr 8 gehalten, welches seinerseits längsverschiebbar im Zylinderrohr 7 geführt wird. In das Zylinderrohr 7, und zwar zwischen einer an seinem Ende auf der Innenseite gebildeten Schulter 22 und einer vom vorderen Ende des Kolbenrohres 8 gebildeten Schulter 23, ist eine Druckfeder 3 eingelegt. In der gezeigten, voll zurückgezogenen Lage des Lanzenrohres 2 ist diese Druckfeder 3 annähernd entspannt. Das Zylinderrohr 7 ist mit einem Flansch 9 versehen, mittels dessen die komplette Injektionslanze an die Flossenrohrwand 6 eines Rauchgaskanals montiert ist. Hierzu ist ein Trägerrohr 10 auf die Aussenseite einer Flossenwand 6 aufgeschweisst, wobei an der betreffenden Stelle in einen Flossenwandsteg eine Öffnung 24 zur Aufnahme der Spitze des Schutzrohres 1 eingebracht wurde. Das Trägerrohr schliesst an seinem hinteren Ende mit einem Flansch 11 ab. Zur Montage wird die Injektionslanze in das Trägerrohr 10 eingeschoben, die Spitze des Schutzrohres 1 durch die Öffnung in der Flossenwand 6 geführt und der Flansch 9 am Zylinderrohr 7 mit dem Flansch 11 des Trägerrohres verschraubt. Der einfache Aufbau erlaubt ebenfalls eine einfache und schnelle Demontage bzw. einen einfachen und schnellen Austausch der Spitze des Schutzrohres 1. Das Kolbenrohr 8 ist im Zylinderrohr 7 dichtend geführt, wozu es mehrere Kreisnuten 25-28 für Dichtringe besitzt. Das Kolbenrohr 8 weist von der Vorderseite her ausgenommen eine Sackbohrung 15 auf, deren Wandung im Endbereich von mindestens einer Querbohrung 16 durchsetzt ist. An zwei Stellen münden Stutzen 17,20 in das Zylinderrohr 7. Am hinteren Ende ist das Zylinderrohr 7 mit einem Flansch 12 versehen, an den mittels eines abdichtenden Flansches 13 ein Rohr 14 angeschlossen wird.

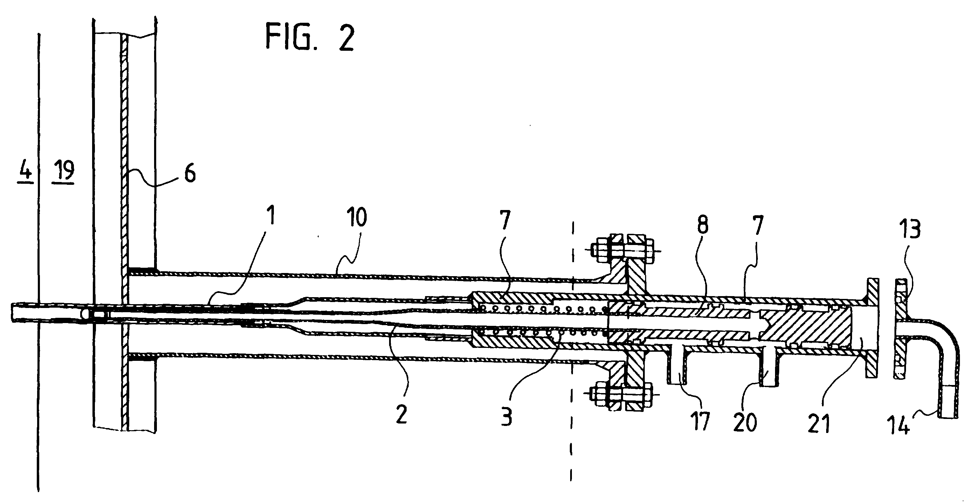

Bei Aktivierung der Injektionslanze wird das Behandlungsmedium zum Eintritt in das Rohr 14 und in den Stutzen 17 freigegeben. Unter dem wirkenden Druck des Behandlungsmediums wird das Kolbenrohr 8 gegen die Kraft der Feder 3 nach vorne, das heisst in der Zeichnung von rechts nach links geschoben. Die Figur 2 zeigt die Position des Kolbenrohres 8 kurz nach Aktivierungsbeginn. Das Behandlungsmedium füllt zunächst den Raum 21, ohne daß es in das Lanzenrohr 2 und damit in den Rauchgasstrom 4 gelangen kann. Bei sich füllendem Raum 21 wird das Kolbenrohr 8 mit dem daran verbundenen Lanzenrohr 2 nach vorn gefahren, wobei der Druck des Behandlungsmediums ausreicht, um Verschmutzungen, die sich im Mündungsbereich der leeren Spitze des Schutzrohres 1 ansammelten, auszustossen bzw. auszuspülen.

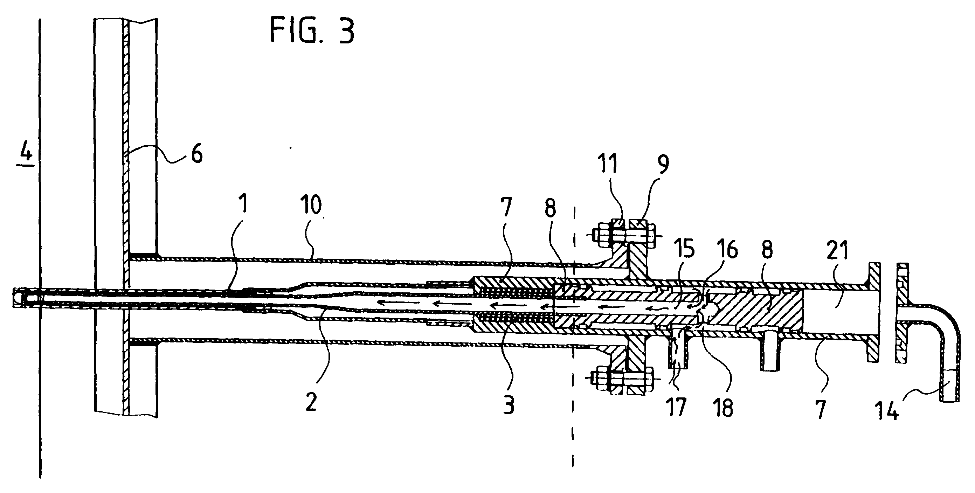

Die Figur 3 zeigt die Situation, nachdem das Lanzenrohr 2 soweit vorgefahren ist, daß der Stutzen 17 zwischen den Dichtungsnuten 26 und 27 im Bereich 18 des Kolbenrohres 8 liegt. Die Druckfeder 3 ist entsprechend zusammengedrückt und gespannt. Der Stutzen 17 und die Leitung 14 sind medienseitig z.B. über ein Mehrwegeventil verbunden. Deshalb hält das Behandlungsmedium über die am hinteren Ende des Zylinderrohres 7 angeschlossene Leitung 14 den Druck im Raum 21 aufrecht und fährt das Lanzenrohr 2 gegen die Kraft der Druckfeder 3 in die vordere Endlage und hält danach das Lanzenrohr 2 in der vorderen Endlage. Gleichzeitig strömt jetzt Behandlungsmedium entsprechend der eingezeichneten Pfeile durch den Stutzen 17 über den Bereich 18 des Zylinderrohres 7 und die Querbohrung 16 sowie die Sackbohrung 15 in das Lanzenrohr 2 und gelangt unter dem anstehenden Mediendruck in einer durch die Düse 5 festgelegten räumlichen Verteilung in den Rauchgasstrom 4.

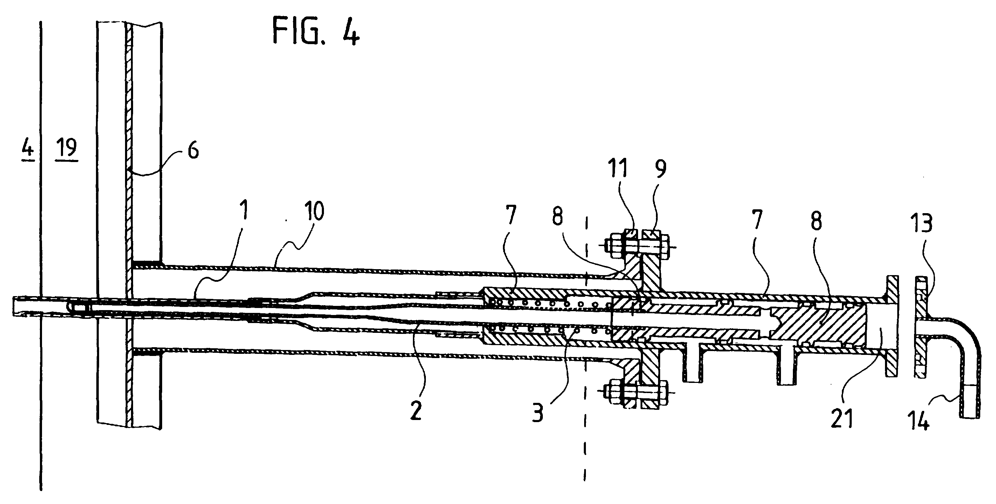

Die Figur 4 zeigt das Lanzenrohr 2 nach dem Deaktivieren der Lanze beim Zurückziehen im Schutzrohr 1, bevor es seine Ruheposition erreicht hat. Beim Deaktivieren der Lanze wird der Zutritt von Behandlungsmedium in das Rohr 14 und in den Stutzen 17 z.B. über ein Mehrwegeventil gesperrt und gleichzeitig eine Verbindung zwischen dem Stutzen 20 und der Leitung 14 unter Einbeziehung eines Pufferspeichers hergestellt. Der Druck im Raum 21 fällt zusammen und die Druckfeder 3 ist in der Lage, das Kolbenrohr 8 im Zylinderrohr 7 nach hinten zu drücken. Das dabei zu verdrängende Behandlungsmedium aus dem Raum 21 wird solange über die Leitung 14 in einen Pufferspeicher gedrückt, bis der Stutzen 20 in den Bereich 18 des Kolbenrohres zwischen den Dichtungsnuten 26 und 27 gelangt. Ab diesem Moment strömt das verdrängte Behandlungsmedium aus dem Pufferspeicher und aus dem Raum 21 durch den Stutzen 20 über den Bereich 18 des Zylinderrohres 7 und die Querbohrung 16 sowie die Sackbohrung 15 in das Lanzenrohr 2 und wird unter dem anstehenden Federdruck durch die Düse 5 über die Spitze des Schutzrohres in den Rauchgaskanal 4 entsorgt.

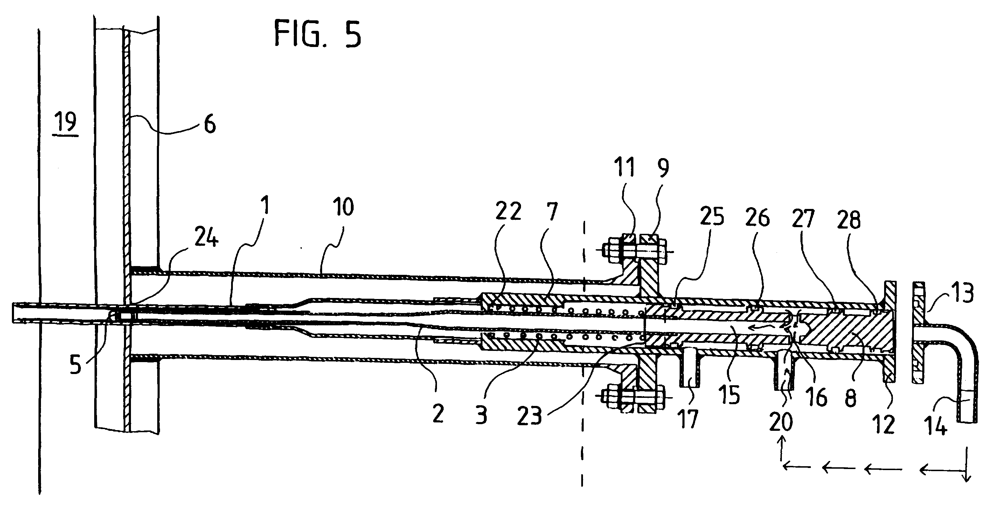

Die Figur 5 zeigt schliesslich das Kolbenrohr 8 mit eingezogenem Lanzenrohr 2 in seiner nichtaktiven Position, dass heisst, es befindet in der Zeichnung in seiner Position ganz rechts. Die letzte Restmenge von Behandlungsmedium aus dem nicht dargestellten Pufferspeicher und dem Raum 21 läuft noch durch das Lanzenrohr 2 in das Schutzrohr 1 hinaus und verdampft dort in den Rauchgaskanal.

Bei dieser Injektionslanze wird also die Spitze des äusseren Schutzrohres 1 permanent im Rauchgasstrom 4 belassen, während das Lanzenrohr 2 aus dem Rauchgasstrom 4 zurückgezogen wird, und zwar bis in den Bereich der Flossenwand 6. Im nichtaktiven Zustand muss die Lanzenrohrspitze mit der Düse 5 vor Verschmutzung, Verstopfung, Erosion, Korossion, und Verbrennen geschützt werden. Die Spitze des Schutzrohres 1 übernimmt diese Funktion und gewährt dadurch eine lange Standzeit. Die Spitze des Schutzrohres kann ohne weiteres auch bei hohen Temperaturen, die bis zum Erglühen führen, im Rauchgasstrom verbleiben. Wenn die Mündung der Spitze des Schutzrohres verschmutzt bzw. von Rauchgaspartikeln zugesetzt wird, so wird die Verschmutzung durch das ausfahrende Lanzenrohr 2 bei Aktivierung der Lanze automatisch beseitigt und in den Feuerraum gestossen bzw. gespült. Es wird weder Druckluft als ständiges Spülluftmedium benötigt, um Staubanlagerungen zwischen Lanzenrohr 2 und dem Schutzrohr 1 zu verhindern, noch bedarf es einer gesonderten Kühlung der Lanze im nichtaktiven Zustand. Damit entfallen sämtliche Leitungen, Zuführungen und Einrichtungen für die Bereitstellung dieser Medien an allen Eindüsstellen. Für das Ein- und Ausfahren werden keine motorischen oder pneumatischen Einrichtungen und Leitungen benötigt, sondern es wird ausschliesslich nur der Druck des in jedem Falle an der Eindüsstelle bereitzustehenden Behandlungsmediums genutzt, was eine drastische Vereinfachung und Verringerung der Rohrleitungskosten bedeutet. Die Montage der neuen Injektionslanze ist denkbar einfach. Außer der Spitze des Schutzrohres ist praktisch mit keinem Verschleiß zu rechnen. Der Austausch der Spitze des Schutzrohres kann dank der Montage mittels der Flansche 11,9 im Bedarfsfall sehr schnell und praktisch ohne zusätzliche Kosten erfolgen. Die Injektionslanze besteht nur aus wenigen Bauteilen und kann daher kostengünstig hergestellt werden.

## Patentansprüche

1. Injektionslanze zum Einbringen von flüssigen oder gasförmigen Behandlungsmedien in einen Rauchgasstrom (4), mit einem Schutzrohr (1) und einem darin liegenden Lanzenrohr (2), dadurch gekennzeichnet, dass das Lanzenrohr (1) im Schutzrohr (2) linear verschiebbar ist.

2. Injektionslanze nach Anspruch 1, dadurch gekennzeichnet, dass zwischen dem Schutz- (1) und dem Lanzenrohr (2) eine Feder (3) eingebaut ist, kraft derer die lineare Verschiebung des Lanzenrohres (2) im Schutzrohr (1) in einer Richtung bewirkbar ist, und dass das Lanzenrohr (2) in der entgegengesetzten Richtung kraft des anstehenden Behandlungsmedien-Druckes verschiebbar ist.

3. Injektionslanze nach Anspruch 2, dadurch gekennzeichnet, dass die Feder (3) eine Druckfeder (3) ist, welche das Lanzenrohr (2) umschliesst und in Richtung der Lanzenmündung auf einer Schulter (22) aufliegt, die im Inneren eines Zylinderrohres (7), welches auf seiner Vorderseite das Schutzrohr (1) trägt, gebildet wird, und in der anderen Richtung auf einer Schulter (23) aufliegt, die von einem Kolbenrohr (8) gebildet wird, welches auf seiner Vorderseite das Lanzenrohr (2) trägt und im Zylinderrohr (7) geführt wird.

4. Injektionslanze nach Anspruch 3, dadurch gekennzeichnet, dass das Zylinderrohr (7) bei Anstehen von Behandlungsmedium an seinem hinteren Ende zusammen mit dem in ihm geführten Kolbenrohr (8) als Kolben-Zylindereinheit zu wirken bestimmt ist, derart, dass das Lanzenrohr (2) unter dem Druck des Behandlungsmediums im Schutzrohr (1) gegen die Federkraft der Druckfeder (3) in seine vorderste Position verschiebbar ist.

5. Injektionslanze nach Anspruch 4, dadurch gekennzeichnet, dass das Kolbenrohr (8) von vom mit einer zentralen axialen Sackbohrung (15) versehen ist, die an ihrem Ende von mindestens einer durchgehenden Querbohrung (16) durchsetzt ist, und dass diese Querbohrung (16) in einen am Kolbenrohr (8) verjüngten Aussenbereich (18) mündet, sodass bei nach vom in Richtung der Lanzenmündung geschobener Lage das Kolbenrohres (8) die Querbohrung (16) mit einem seitlich in das Zylinderrohr (7) mündenden Stutzen (17) kommuniziert.

6. Injektionslanze nach einem der Ansprüche 4 bis 5, dadurch gekennzeichnet, dass das Kolbenrohr (8) von vom mit einer zentralen axialen Sackbohrung (15) versehen ist, die an ihrem Ende von mindestens einer durchgehenden Querbohrung (16) durchsetzt ist, und dass diese Querbohrung (16) in einen am Kolbenrohr (8) verjüngten Aussenbereich (18) mündet, sodass bei nach hinten in Richtung des Rohres (14) geschobener Lage das Kolbenrohres (8) die Querbohrung (16) mit einem seitlich in das Zylinderrohr (7) mündenden Stutzen (20) kommuniziert.

7. Injektionslanze nach einem der Ansprüche 3 bis 6, dadurch gekennzeichnet, dass das Schutzrohr (1) auf der Vorderseite des Zylinderrohres (7) angeordnet ist, welches mit einem Flansch (9) ausgerüstet ist, der nach Hineinstecken des Vorderteils der Injektionslanze in ein Trägerrohr (10) mit Endflansch (11) mit diesem Endflansch (11) verschraubbar ist, wobei das Trägerrohr (10) vorgesehen ist, mit seinem vorderen Ende von aussen auf die Flossenrohrwand (6) eines Rauchgaskanals aufgeschweisst zu werden.

8. Injektionslanze nach einem der Ansprüche 3 bis 7, dadurch gekennzeichnet, dass das Zylinderrohres (7) an seinem hinteren Ende einen Flansch (12) trägt, auf den ein dichtender Flansch (13) eines Rohres (14) für Behandlungsmedium aufschraubbar ist.

9. Injektionslanze nach einem der Ansprüche 5 bis 8, dadurch gekennzeichnet, dass das Rohr (14) mit einem Pufferspeicher kommuniziert, der beim Zurückziehen des Lanzenrohres (2) zur Aufnahme von aus dem Raum (21) hinter dem Kolbenrohr (8) verdrängten Behandlungsmedium bestimmt ist.

10. Injektionslanze nach einem der Ansprüche 5 bis 9, dadurch gekennzeichnet, dass die Stutzen (17), (20) und das Rohr (14) untereinander mit einem Mehrwegeventil so verbunden sind, dass das Rohr (14) einerseits mit Stutzen (17) und dem Zylinderrohr (7) in der vorderen Lage des Lanzenrohres (2) so kommunizieren, dass das ausgefahrene Lanzenrohr (2) in seiner Position gehalten wird und gleichzeitig Behandlungsmedium durch den Stutzen (17) über das Kolbenrohr (8) und das Lanzenrohr (2) in den Rauchgasstrom eingebracht wird.
